# EUROPEAN PATENT APPLICATION

(11) **EP 2 621 049 A1**
(43) Date of publication of application: **31.07.2013**
(21) Application number: 10857549.9
(22) Date of filing: 24.09.2010
(51) Int. Cl.: H02J 7/00, H02J 3/00

(54) **EVALUATION APPARATUS, EVALUATION METHOD, AND EVALUATION PROGRAM**

(71) Applicant: Kabushiki Kaisha Toshiba, Minato-ku Tokyo 105-8001 (JP)
(72) Inventor: NISHIBAYASHI, Yasuyuki, Tokyo 105-8001 (JP); WADA, Takahisa, Tokyo 105-8001 (JP); ISE, Kotaro, Tokyo 105-8001 (JP); TERAMOTO, Keiichi, Tokyo 105-8001 (JP); DOI, Yusuke, Tokyo 105-8001 (JP); TERASHIMA, Yoshiki, Tokyo 105-8001 (JP)
(74) Representative: HOFFMANN EITLE
(86) International application number: PCT/JP2010/066537
(87) International publication number: WO 2012/039055

(57) **Abstract**

A determination device determines permission/forbiddance to charge an accumulator that obtains electrical power from a power grid network. The determination device comprises an accumulator information acquisition unit configured to acquire information about a requested power amount requested to charge the accumulator, a grid information acquisition unit configured to acquire information about an available power amount that can be provided from the power grid network, and a determination unit configured to determine permission or forbiddance with respect to the accumulator based on the information about the requested power amount and the information about the available power amount.

## Description

### Field

Embodiments according to the present invention relates to a determination device, a determining method and a determination program.

### Background

Conventionally, there is a method for controlling charging and discharging that enables control of charging and discharging of an electrical accumulator being installed at household, facility, building, factory, and so on, using ax external microcomputer connected via a CAN (controller area network). Moreover, in the prior art, there is a technique for charging an electrical accumulator being installed at household, etc., using electrical power supplied from a power grid network.

### Citation List

### Patent Literature

Patent Literature 1: US-B 6,639,383
Patent Literature 2: JP-A 2008-67418 (KOKAI)

### Summary

### Technical Problem

However, in a case where electrical accumulators are charged in conjunction with the power grid network, there is a possibility that the grid network may break down when charges for a number of electrical accumulators start at the same time.

### Solution to Problem

According to one aspect of embodiments, a determination device of determining permission/forbiddance to charge an accumulator that obtains electrical power from a power grid network comprises: an accumulator information acquisition unit configured to acquire information about a requested power amount requested to charge the accumulator; a grid information acquisition unit configured to acquire information about an available power amount that can be provided from the power grid network; and a determination unit configured to determine permission or forbiddance with respect to the accumulator based on the information about the requested power amount and the information about the available power amount.

According to another aspect of the embodiments, a determining method of determining permission/forbiddance to charge an accumulator that obtains electrical power from a power grid network includes: acquiring information about a requested power amount requested to charge the accumulator; acquiring information about an available power amount that can be provided from the power grid network; and determining permission or forbiddance with respect to the accumulator based on the information about the requested power amount and the information about the available power amount.

According to yet another aspect of the embodiments, a determination program for operating a computer to determine permission/forbiddance to charge an accumulator that obtains electrical power from a power grid network includes the instructions of: acquiring information about a requested power amount requested to charge the accumulator; acquiring information about an available power amount that can be provided from the power grid network; and determining permission or forbiddance with respect to the accumulator based on the information about the requested power amount and the information about the available power amount.

### Brief Description of Drawings

FIG. 1 is a system configuration diagram according to a first embodiment.
FIG. 2 is a schematic view of an electrical accumulator system according to the first embodiment.
FIG. 3 is a schematic view of an EV system according to the first embodiment.
FIG. 4 is a block diagram of a charge control device in the first embodiment.
FIG. 5 is an illustration showing a relationship between a remaining battery level and charging time in the first embodiment.
FIG. 6 is a block diagram of a charge determination device in the first embodiment.
FIG. 7 is an operation flowchart of the charge control device in the first embodiment.
FIG. 8 is an operation flowchart of a determination procedure in the first embodiment.
FIG. 9 is an illustration showing one example of available electrical energy and charge control in the first embodiment.
FIG. 10 is an illustration showing another example of available electrical energy and charge control in the first embodiment.
FIG. 11 is a sequence diagram in a case where charge is permitted in the first embodiment.
FIG. 12 is a sequence diagram in a case where charge is forbidden in the first embodiment.
FIG. 13 shows one example of a communication massage about information on the electrical accumulator in the first embodiment.
FIG. 14 shows another example of a communication massage about information on the electrical accumulator in the first embodiment.
FIG. 15 shows an example of a communication massage about information on charge permission in the first embodiment.
FIG. 16 shows an example of a communication massage on information of charge forbiddance in the first embodiment.
FIG. 17A shows one example of a priority manager in the first embodiment.
FIG. 17B shows another example of a priority manager in the first embodiment.
FIG. 18 is a block diagram of a charge determination device according to a second embodiment.
FIG. 19 is an operation flowchart of a determination procedure in the second embodiment.
FIG. 20 is a block diagram of an EMS in the second embodiment.
FIG. 21 is an operation flowchart of the EMS in the second embodiment.
FIG. 22 shows an example of a communication massage about system information in the second embodiment.
FIG. 23 is a block diagram of a smart meter in the second embodiment.
FIG. 24 is an operation flowchart of the smart meter in the second embodiment.
FIG. 25 shows an example of a communication massage about measurement information in the second embodiment.
FIG. 26 is a sequence diagram in a case where charge is permitted in the second embodiment.

### Description of Embodiments

In the following, a determination device, a determining method and a determining program according to exemplified embodiments will be described in detail with reference to the accompanying drawings.

### First Embodiment

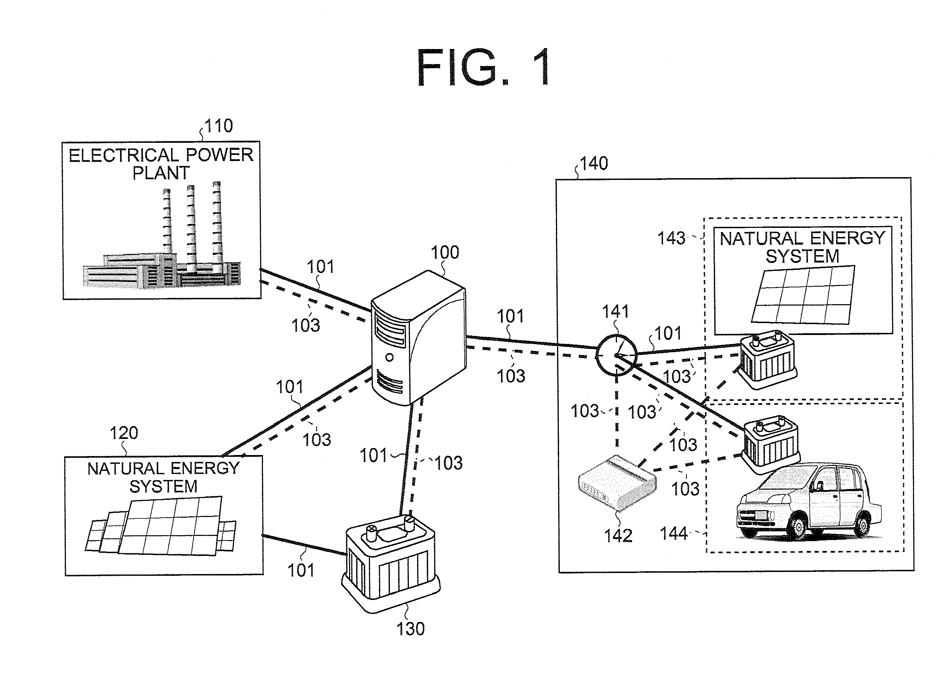

FIG. 1 is a system configuration diagram according to a first embodiment. In FIG. 1, to a power grid network 101, an electrical generating facility, such as an electrical power plant 110, a natural energy system, and so forth, which supplies an electrical power to the power grid network 101, an accumulator system 130, an EMS (energy management system) 100, and so on, are connected. The natural energy system 120 includes systems which generate electrical power from natural energy sources such as solar light, wind, geothermal power, and so forth, for instance. Furthermore, in a premise of a consumer 140 such as a household, a smart meter 141 and a HEMS (home energy management system) 142 are installed. Moreover, in the premise of the consumer 140, an accumulator system 143, an EV (electric vehicle) system 144, and so on, are installed. In the following, installations such as the accumulator system 143, the EV system 144, and so on, will be collectively referred to as accumulators. The accumulator system 143 can be connected with the natural energy system installed in the premise of the consumer 140.

The electrical power plant 110 generates a large amount of electrical power by facilities for thermal power, atomic power, or the like, and supply the generated electrical power to households, buildings, factories, and so on, via a power transmission grid. In this disclosure, the power transmission grid ranging from the electrical power plant 110 to consumer 140 will be referred to as the power grid network 101. The natural energy system 120 generates electrical power from energy existing in nature, such as wind power and solar light, and like the electrical power plant 110, supplies the generated electrical power to the consumer 140 via the power grid network 101. By installing the natural energy system 120 at the power grid network 101, it is possible to effectively manage running of the electrical power plant 110. The accumulator system 130 assumes a role in storing surplus generated by the electrical power plant 110 and the natural energy system 120. The EMS 100 is connected with the electrical power plant 110, the natural energy system 120, the accumulator system 130 and the consumer 140, respectively, via the power grid network 101 and a communication network 103, and thereby, balances electrical power supplied from the electrical power plant 110, the natural energy system 120 and the accumulator system 130 with load power consumed at a side of the consumer 140.

The smart meter 140 measures the electrical power being consumed in the premise of the consumer 140 and periodically notified a management server (not shown) of the electrical power provider of the measured value. The management server is called a MDMS (metering data management system). The above-described EMS 100 can calculate the total amount of load power at the side of the consumer 140 by working together with the MDMS. The accumulator system 143 installed in the premise of the consumer 140 stores the electrical power supplied from the power grid network 101 of the electric power provider or generated by a natural energy system in the same premise. The EV system 144 stores the electrical power in a vehicle-installed accumulator via a battery charger. The HEMS 142 controls and adjusts power consumption in a household. In the example shown in FIG. 1, although the consumer 140 is assumed to be a household, it is not limited to such case. For instance, it is also possible to apply this embodiment to buildings and factories. However, in a case of a building, a BEMS (building energy management system) is supposed to control and adjust the power consumption in the premise, and in a case of a factory, an FMES (factory management system) is supposed to control and adjust the power consumption in the premise, in stead of the HEMS 142.

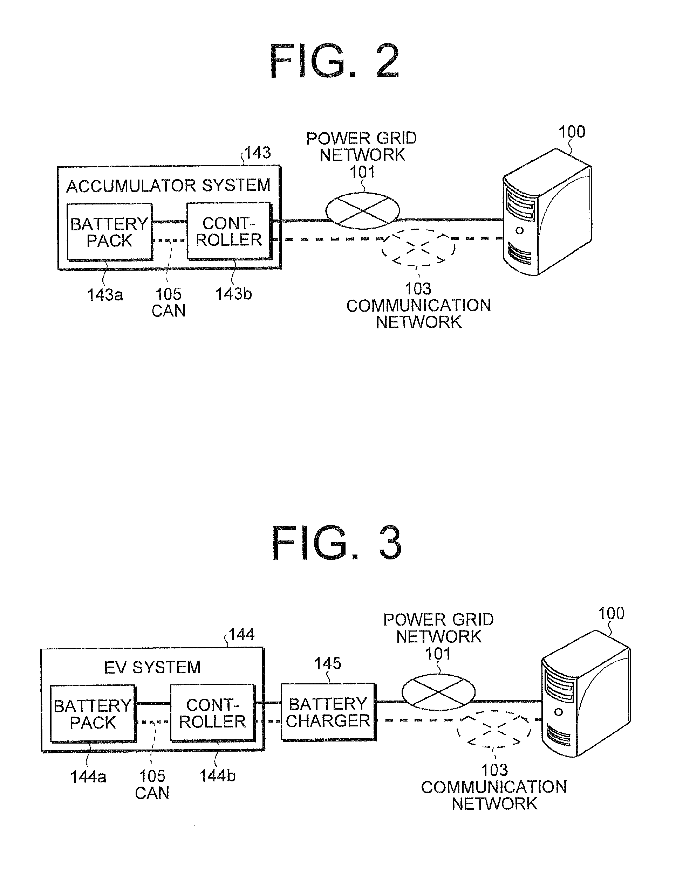

FIG. 2 shows a schematic view of an accumulator system according to this particular embodiment, and FIG. 3 shows a schematic view of an EV system according to this particular embodiment. The accumulator system 143 is used for stationary and the EV system 144 is used for in-car.

The accumulator system 143 is structured with a battery pack 143a and a controller 143b. The battery pack 143a has an internal processer which manages an internal state of the battery pack 143a in addition to a plurality of battery cells, and controls charging and discharging of electrical power based on an instruction from the controller 143b. The battery pack 143a notifies the controller 143b of a rated voltage of the battery pack 143a, a current value at charging and discharging, a SOC (state of charge), a SOH (state of health), and so forth. The controller 143b can be provided on a PCS (power conditioning system: direct current to alternate current converting and voltage variation controlling) or a MPU (micro processing unit) as connected with the PCS, and can also be provided by other structures using hardware or software. Furthermore, also with respect to controlling charging and discharging and information notice between the controller 143b and the battery pack 143a, it can be achieved by various other methods such as a method using a CAN 105, a method using an electrical signal line defined uniquely, and so on.

The controller 143b in the accumulator system 143 has a communication facility and communicates with the EMS 100 installed at the power grid network 101. When the EMS 100 is applied just simply, an electrical power outage may occur due to supply shortage caused by a plurality of the accumulator systems 143 starting charging simultaneously. Accordingly, information about an accumulator acquired from the battery pack 143a is transmitted to the EMS where and the EMS 100 determines permission or forbiddance of charging. By starting controls under the central management by the EMS 100, it is possible to prevent possible electrical power outage from occurring.

The EV system 144 in FIG. 3 has a structure similar to the one of the accumulator system 143 in FIG. 2, although what is different from the accumulator system 143 is that it has a battery charger 145. A controller 144b in the EV system 144 in FIG. 3 relays charge control and information notice between a battery pack 144a and the battery charger 154, and does not have a communication facility for communicating with the EMS 100 on the power grid network 101. That is, in the EV system 144, the main function of the controller 143b in the accumulator 143 is being shifted to the battery charger 145. However, each specific procedure of the systems is common between FIGS. 2 and 3, and further, it is possible to make the controller 144b of the EV system 144 have the same function as the controller 143b of the accumulator 143. Moreover, as for an algorithm about charging and discharging of electric power with respect to the battery pack 143a/144a, there are methods such as centering on the controller 143b/144b, centering on the battery charger 145, centering on the HEMS 142 in the premise and the EMS 100 of the power grid network 100, and so on.

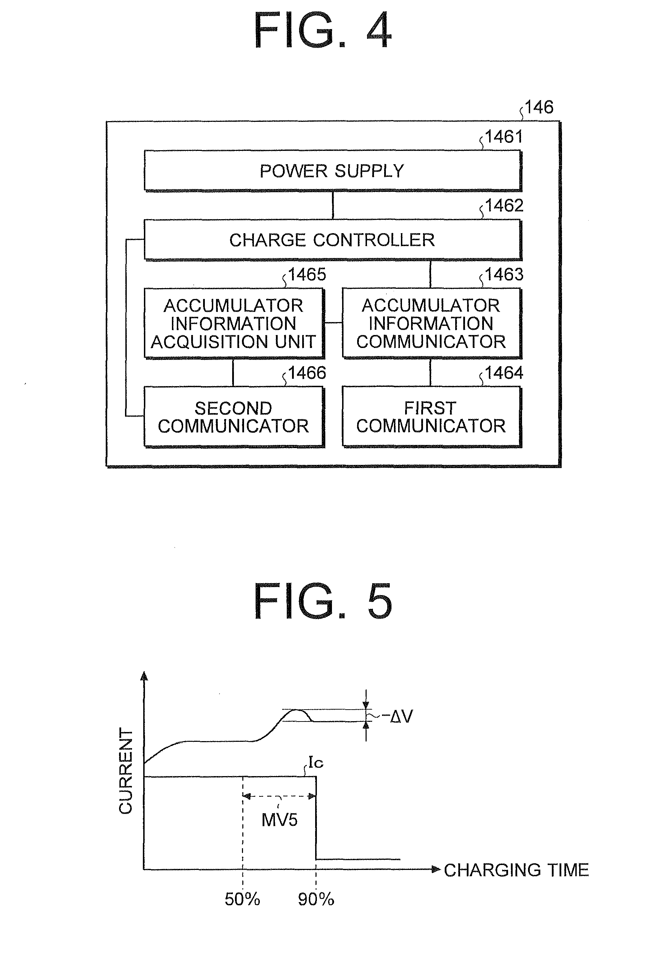

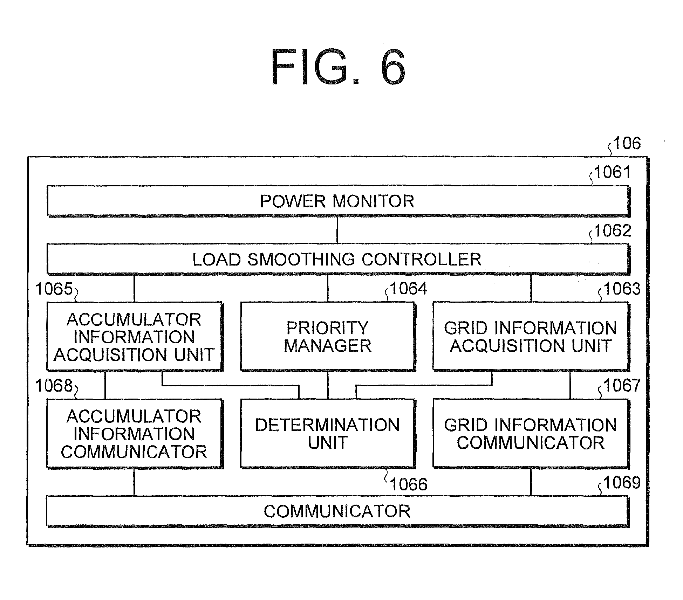

A charge control device according to the first embodiment is shown in FIG. 4, and a charge determination device is shown in FIG. 6. The charge control device 146 corresponds to the controller 143a in the accumulator system 143 in FIG. 2 and the battery charger 145 in the EV system 144 in FIG. 3. The charge determination device 106 corresponds to the EMS 100 installed at the power grid network 101. In the first embodiment, the charge control device 146 sends electrical power information about the accumulator to the charge determination device 106, and recognizes permission or forbiddance of charge control based on a result of determination process in the charge determination device 106.

The charge control device 146 in FIG. 4 is structured by a power supply 1461, a charge controller 1462, an accumulator information acquisition unit 1465, an accumulator information communicator 1463, a first communicator 1464, and a second communicator 1466. The power supply 1461 executes converting direct current to alternate current, detecting frequency of electrical power, detecting and suppressing voltage variation, and so on, and executes supplying electrical power to the battery pack 143a according to an instruction from the charge controller 1462. In the first embodiment, the electrical power is calculated by the product of voltage or current or both. The accumulator information acquisition unit 1465 acquires static information (rated voltage, rating capacity, beginning and terminating charge voltage, beginning and terminating discharge voltage, upper limit temperature, under limit temperature, maximum charge current, maximum discharge current, etc.) which is unique information specific to the battery pack 143a. Furthermore, the accumulator information acquisition unit 1465 periodically acquires state information (SOH, SOC, charge current, discharge current, charge voltage, discharge voltage) being dynamic information in battery pack operation. In a charging method with constant current being an ordinary charging method, a current flowing into the battery cell inside the battery pack 143a remains at a constant state until the SOC expressed by percentage reaches a predetermined threshold. Upon this, as shown in FIG. 5, by acquiring a value of the SOC from the battery pack 143a, the charge control device 146 can calculate the remaining charging time (the horizontal axis of the graph) corresponding to the SOC, a maximum charge current (the vertical axis of the graph) necessary for charging, and the necessary electrical power amount (a product of the remaining charging time and a current value) for charging. In charging at constant current, after the SOC exceeds the predetermined threshold, the current value necessary for charging becomes minimum. The second communicator 1466 is provided as the CAN 105 being a typical interface standard of the battery pack 143a or an electrical signal line uniquely standardized by a bender. The accumulator information communicator 1463 generates a communication message about information of the electrical power amount necessary for charge control (the rated voltage, the maximum charge current, the remaining charging time corresponded with the SOC) that the charge control device 146 acquired from the battery pack 143a, and sends this communication massage to the charge determination device 106 of the power grid network 101 via the first communicator 1464. Although a detail of the communication massage will be described later on, as for brief information, it is possible to transmit information including all of the above-mentioned three kinds, and also possible to transmit information calculated as the information of electrical power amount necessary for the charge control. The first communicator 1464 can be provided as a wire communication medium such as an optical fiber, a telephone line, an Ethernet, etc., or as a wireless communication medium. The first communicator 1464 in the first embodiment does not depend on a specific communication medium. The charge controller 1462 in the charge control device 146 sends the communication massage about the information of the accumulator to the charge determination device 106 of the power grid network 101, and then receives a communication massage about permission and forbiddance of charging, and when charging is permitted in the received communication massage, starts charge control with respect to the battery pack 143a. A procedure for charge control by the charge control device 146 can be applied to a recognition procedure in a soft space by the electrical power provider as well as prevention of an electrical power outage of the power grid network in the first embodiment.

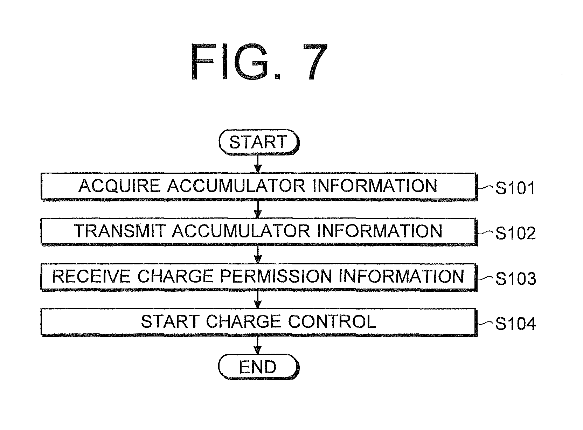

An operation flowchart of the charge control device in the first embodiment is shown in FIG. 7. This operation is executed, for instance, at predetermined time, on a periodic basis, at a time when a remaining amount of the accumulator pack 143a becomes under the predetermined threshold, based on operation by use, based on a request from a side of the charge determination device 106, or the like. As shown in FIG. 7, the charge control device 146 acquires a rated voltage (unit: voltage (V)), a maximum charge current (unit: ampere (A)), and a SOC (unit: percentage (%)) from the battery pack 143a, and calculates remaining charging time (unit: hour (h)) that corresponds to the SOC (step S101). Next, the charge control device 146 generates a communication massage about such accumulator information, and sends this to the charge determination device 106 of the power grid network (step S102). Then, the charge control device 146 receives a determination result by the charge determination device 106 (step S103), and then determinates as to whether charging is permitted or not in the received massage (step S104), and when the charging is permitted (YES of step S104), starts charge control directed to the battery pack 143a (step 105). Specifically, electrical power supply toward the battery pack 143a is executed. On the other hand, when the charging is not permitted (NO of step S104), the charge control device 146 terminates the operation of FIG. 7 without any further process.

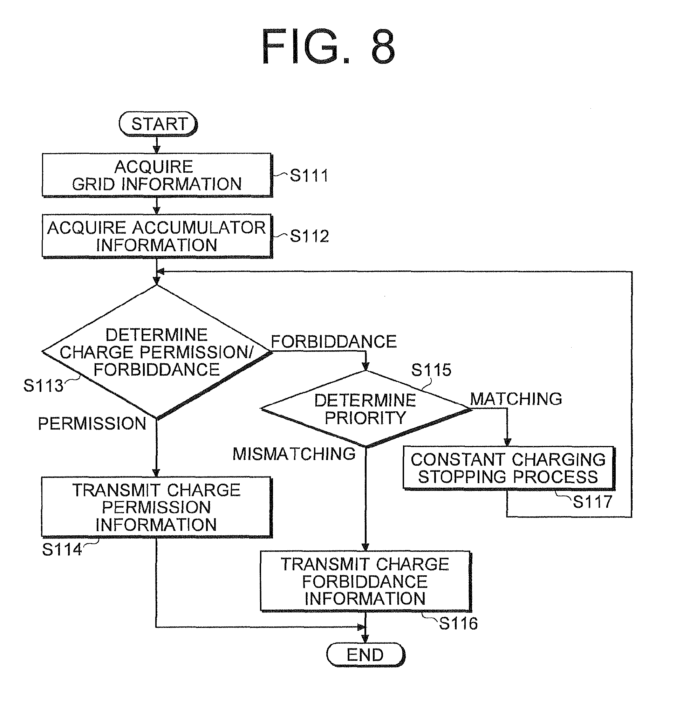

The charge determination device 106 in FIG. 6 is structured with a power monitor 1061, a load smoothing controller 1062, an accumulator information acquisition unit 1065, an accumulator information communicator 1068, a grid information acquisition unit 1063, a grid information communicator 1067, a priority manager 1064, and a determination unit 1066. The power monitor 1061 monitors a condition of the power grid network 101 in order to enable functions of the EMS 100 such as a load control in the grid and a supply and demand adjustment in cooperation with the electrical power provider. The load smoothing controller 1062 prompts suppression of power consumption with respect to the side of the consumer 140, suppression of power generation at the natural energy system 120, and charging and discharging at the accumulator 130 installed on the power grid network 101 based on a detection result by the power monitor 1061 about a difference between a predicted and an actual consumption amount. The accumulator information acquisition unit 1065 acquires the information about the rated voltage (unit: voltage (V)), the maximum charge current (unit: ampere (A)) and the remaining charging time (unit: hour (h) being as associated with the SOC from the communication massage transmitted from the charge control device 146, the communication massage being information about the battery pack in the accumulator system 143, and calculates a electrical power amount (unit: watt-hour (Wh)) necessary for charging at the accumulator 143. As described above, in case when the charge control device 146 itself calculates the necessary electrical power amount, the accumulator information acquisition unit 1065 acquires the information about the electrical power amount (unit: watt-hour (Wh)) necessary for charging. The accumulator information communicator 1068 analyzes the communication massage transmitted from the charge control device 146. The grid information acquisition unit 1063 acquires an available power amount (unit: watt-hour (Wh)) that can be provided by the power grid network 101. Specifically, the gird information acquisition unit 1063 calculates the available power amount by obtaining a difference between an actual amount (unit: watt-hour (Wh)) consumed at the side of the consumer 140 and a planed amount (unit: watt-hour (Wh)), based on a summation of electrical power productions (unit: watt-hour (Wh)) by the electrical power plant 110 and the natural energy system 120. In addition to obtaining from the above-described power monitor 1061, it is thinkable that the electrical power productions by the electrical power plant 110 and the natural energy system 120 may be achieved by a static setting with respect to the charge determination device 106 or a dynamic setting by the communication massage from a power feeding command center of the electrical power plant 101. The actual amount consumed at the side of the consumer 140, as described above, can be acquired via the smart meter 141 or the HEMS 142. The planed amount is calculated using a method of predicting while assuming that the power would be the same level as the past actual amount around the same time, and while considering the electrical power amount necessary for the accumulator 143 having already permitted charging. If it is difficult to calculate the planed amount, the determining process may be done while assuming that the amount is zero (i.e. executing the determining process based on only the actual performance). A communicator 1069 can be realized by a wire communication medium such as an optical fiber, a telephone line, an Ethernet, etc. As with the case of the charge control device 146, the communicator 1069 of the charge determination device 106 in the first embodiment does not depend on a specific communication medium. The grid information communicator 1067 and the communicator 1069 acquire information necessary for calculating the information about the available power amount using communication massages transmitted/received to/from the power feeding command center of the electrical power plant 110, the HEMS 142, etc. Here, in the first embodiment, these functions are not essential elements, and as described above, it is possible to apply a method of calculating the available power amount based on a monitored status of a frequency variation, and so on, in the poser monitor 1061 in addition to the method of statically setting in the charge determination device 106. The priority manager 1064 is used for determining priority according to a charging characteristic of the accumulator 143 and registration information in the soft space. The determination unit 1066 determines permission or forbiddance with respect to the accumulator 143 based on information in the accumulator information acquisition unit 1065, the grid information acquisition unit 1063 and the priority manager 1064. This determination procedure will be described with reference to an operation flowchart of FIG. 8.

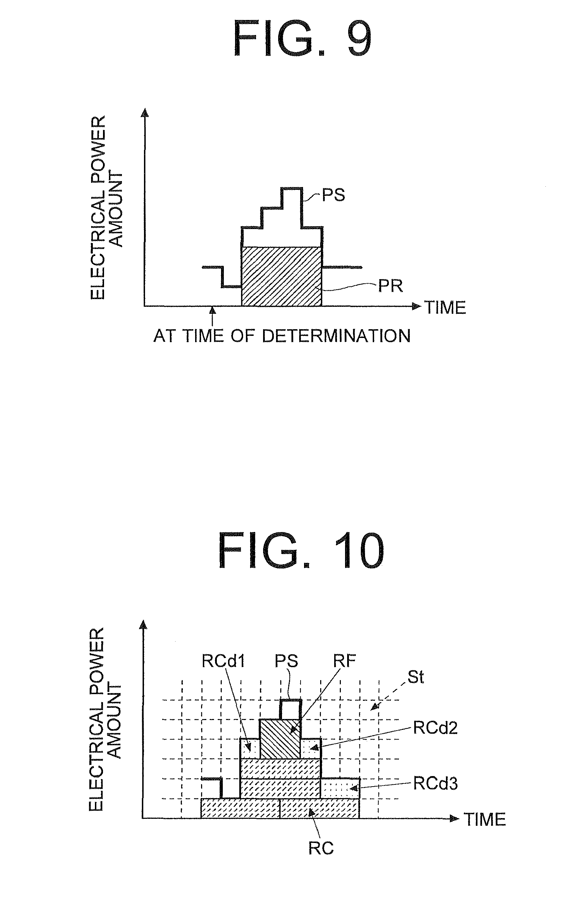

The operation shown in FIG. 8 is executed when a request from the side of the charge control device 146 is received, for instance. As shown in FIG. 8, the charge determination device 106 acquires information about an available power amount (unit: watt-hour (Wh)) that can be provided by the power grid network 101 as grid information (step S111). Moreover, the charge determination device 106 acquires information about a power amount information (unit: watt-hour (Wh)) necessary for the charge control of the accumulator as accumulator information (step S112). After that, the charge determination device 106 executes a determination process (determination of charge permission/forbiddance) for determining permission or forbiddance of charging with respect to the accumulator (step S113). In the determination of charge permission/forbiddance, a permitting determination is done if there is a period in which a required electrical power can be supplied during a required time (permission at step S113), and a forbidding determination is done if there is no such period (forbiddance at step S113). Specifically, the charge determination device 106 manages the available power amount while associating with time based on the electrical power productions by the electrical power plant 110 and the natural energy system 120 and the actual amount consumed at the side of the consumer 140 and the planed amount. The determination unit 1066 in the charge determination device 106 determinates time periods in which differences calculated by subtracting electrical power amounts (requested charging power amounts) necessary for charge control of the accumulator from available power amounts are positive values while beginning at a time when the determination is started. As result, if there are enough time periods to satisfy time periods (requested time) requested by the accumulator, the determination unit 1066 determines charge permission. Specifically, the determination unit 1066 determines charge permission for the requested accumulator, and generates and sends a communication massage for permitting charge (step S114). As shown in FIG. 9, for example, in a graph of which horizontal axis is time and vertical axis is electrical power, when the requested electrical power amount PR is within a range of the available power amount PS, the determination unit 1066 determines permission. The determination of the requested time can be achieved by a method of determining whether a cumulative value under the condition where time is divided into a plurality of time periods meets the request or not in addition to a method of determining whether the request meets as continuing periods or not as shown in the example of FIG. 9. Especially, in the latter method, in order to become possible to deploy beginning and terminating of charge control at when a plurality of the accumulators 143 start charge control simultaneously, it is possible to avoid centering power consumption at a particular time slot and possible electrical power outage from occurring. Moreover, as shown in FIG. 10, it is also possible to divide the available power amount into slots St based on a product of a prospectively defined electrical power amount and time, and have the electrical power amounts in slot unit assigned to requests (RC, RF, RCd1 to RCd3) from the side of the charge control device 146, respectively.

In FIG. 8, if forbiddance of charging with respect to the accumulator is determined (if there is no time period in which the requested electrical power amount can be supplied during the requested time period: forbiddance of step S113), the charge determination device 106 executes a determination process (priority determining process) for starting making an accumulator with higher priority be charged charging preferentially (step S115). The priority manager 1064 in the charge determination device 106 manages priority information associated with classes of the accumulators. Generally, in the charge control, there are a kind of an accumulator with a good rapid charge control with a beneficial effect on a rapid charge characteristic (inflowable current amount per unit time is equal to or greater than a predetermined threshold) and a constant charge control with a beneficial effect on a kind of accumulator with a constant charge characteristic (inflowable current amount per unit time is less than the predetermined threshold). When an accumulator for rapid charge is defined as high priority and an accumulator for constant charge is defined as low priority, the priority manager 1064, for instance, manages an identifier of an accumulator, class information determinable from the identifier of the accumulator, priority information associated with the class information, and so on. Alternatively, in a case where a soft space is associated with usage of an accumulator such as in a charging station in the EV system 144, it is possible to determine the priority based on charging information in such a way that an accumulator of a user with a high payment has a higher priority and an accumulator of a user with a lower payment has a lower priority. In this case, it is preferable that the priority manager 1064 manages the identifier of the accumulator, user information and the charging information associated with the identifier. In the priority determining process in step S115, if the priority of the accumulator being a target of the determination is higher compared with the priorities of the other accumulators for which charging is already permitted (matching at step S115), the charge determination device 106 determines as adequate. Specifically, the charge determination device 106 redetermines of charge forbiddance with respect to the accumulator with the lower priority, and sends a communication massage for forbidding charge control (step S116). If there are a plurality of accumulators with lower priorities, charging for one or more subject accumulators are to be forbidden, and as for selecting the target accumulators, possible methods are a method of selecting in random order as well as a method of selecting in order of permission time. However, selection of accumulators for which charging is to be forbidden is not limited to such specific methods. On the other hand, if the priority of the accumulator being a target of the priority determination is not higher compared with the priorities of the other accumulators for which charging is already permitted (when all priorities of the accumulators are equal or when the priority of the accumulator being the target of the determination is lower: mismatching at step S115), the charge determination device 106 determines as inadequate. When the charge determination device 106 determines inadequacy, the charge determination device 106 generates and sends a communication message for forbidding charge for the subject accumulator (step S117). Here, it is not necessary that the charge determination device 106 does not have the priority manager 1064. In the case where the charge determination device 106 does not have the priority manager 1064, the determining permission or forbiddance of charging in step S113 in FIG. 8 becomes a framework of the determination process of the determination unit 1066.

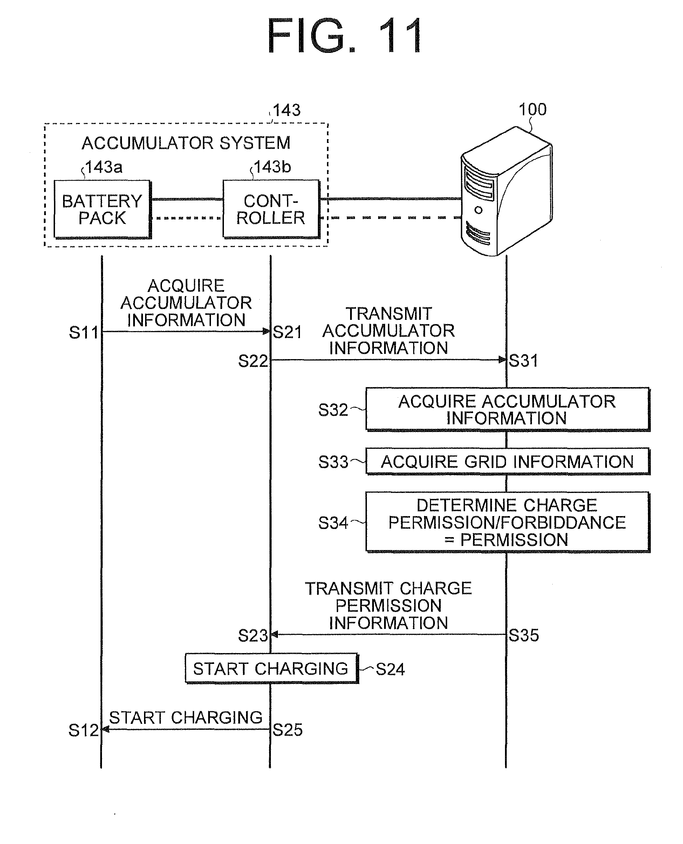

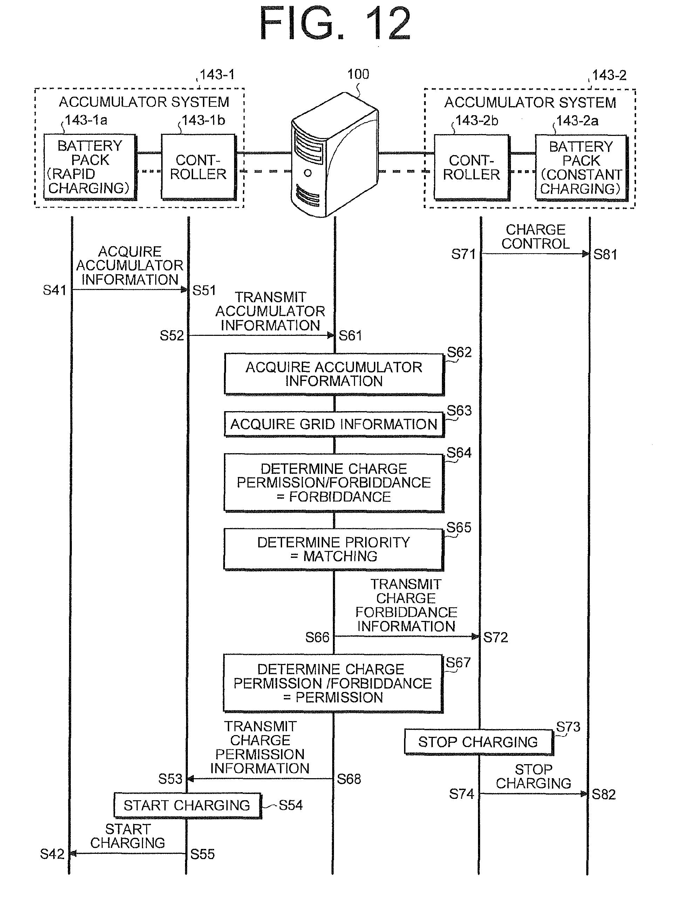

Mutual sequences of the charge control device 146 (corresponding to the accumulator system 143) and the charge determination device 106 (corresponding to the EMS 100) in the first embodiment are shown in FIGS. 11 and 12. FIG. 11 shows an operation in the case where charge is permitted in the determining permission or forbiddance of charging (permission at step S113), and FIG. 12 shows an operation in the case where the matching is determined in the priority determining process (matching at step S115). Especially, in the example of FIG. 12, it is postulated that the charge determination device 106 has the priority manager 1064, and manages classes of the accumulators connected via the communication network 103 and priority information associated with charge information of users of the accumulators. Furthermore, although the examples of FIGS. 11 and 12 show an example based on the accumulator 143 of FIG. 2, the examples can also be applied to the EV system 144 of FIG. 3.

FIG. 11 is an example corresponding to the case where charge is permitted (permission at step S113) in the charge permission or forbiddance determination process (step S113) in the charge determination device 106, specifically, it is an example of a case where there is leeway in an available power amount that can be provided by the power grid network 101. The charge control device 146 corresponds to the controller 143b of the accumulator 143, and the charge determination device 106 corresponds to the EMS 100 installed at the power grid network 101. For starting charging, the controller 143b acquires accumulator information from the battery pack 143a (S11 to S21). As described above, the accumulator information is constructed from a rated voltage, a maximum charge current, and a remaining charging time associated with the SOC. A product of these information items is to be a requested charging power amount necessary to charge the accumulator. The controller 143b generates a communication massage based on the accumulator information of the battery pack 143a, and sends it to the EMS 100 (S22 to S31). The EMS 100 acquires the accumulator information transmitted from the accumulator system 143 (S32) and acquires the available power amount associated with time as grid information (S33). The available power amount is calculated by obtaining a difference between an actual amount (unit: watt-hour (Wh)) consumed at the side of the consumer 140 and a planed amount (unit: watt-hour (Wh)) from electrical power productions by the electrical power plant 110 and the natural energy system 120. And then, the EMS 100 performing as the charge determination device 106 determines permission or forbiddance of charge control based on the requested charging power amount of the accumulator and the available power amount at the side of the grid (S34). In the determination method, as in step S113 of FIG. 8, permission is determined if there is a period in which a required electrical power can be supplied during a required time (permission at step S113), and forbiddance is determined if there is no such period (forbiddance at step S113). In FIG. 11, the example in the case where the permission is determined is shown, and the EMS 100 generates a communication massage about the determination result and sends it to the accumulator system 143 (S35 to S23). The controller 143b of the accumulator system 143 performing as the charge controller 1462 receives the communication massage and starts charging when confirming the permission for charging (S24). Thereby, charging for the battery pack 143a is started (S25 to S12). As described above, as for charge control, there is a method of starting at a time appointed by the EMS 100 in addition to a method of starting immediately after receiving a charge permitting massage.

FIG. 12 is an example corresponding to the case where charge is forbidden (forbiddance at step S113) in the charge permission or forbiddance determination process (step S113) in the charge determination device 106, specifically, it is an example of a case where there are a lot of charge permitted accumulators and there is no leeway in the available power amount that can be provided by the power grid network 101. The left side in FIG. 12 shows a rapid charge accumulator system 143-1 with a higher priority and the right side shows a constant charge accumulator 143-2 with a lower priority. Moreover, in the example of the same figure, it is supposed that charging is already permitted with the constant charge accumulator 143-2 (S71 to S81). A controller 143-1b of the rapid charge accumulator 143-1 with which charging is not being permitted by the EMS 100 acquires an accumulator information from the battery pack 143-1a to start charging. As same as the example of FIG. 11, the accumulator information is constructed from a rated voltage, a maximum charge current, and a remaining charging time associated with the SOC. A product of these information items is to be a requested charging power amount necessary to charge the accumulator. The controller 143-1b of the rapid charge accumulator 143-1 generates a communication massage based on the accumulator information of the battery pack 143-1a, and sends it to the EMS 100 (S52 to S61). The EMS 100 acquires the accumulator information transmitted from the rapid charge accumulator system 143-1 (S62), acquires the available power amount associated with time as grid information (S63), and determines permission or forbiddance of charge control based on such information. In the determination method, as shown in step S113 of FIG. 8, permission is determined if there is a period in which a required electrical power can be supplied during a required time (permission at step S113), and forbiddance is determined if there is no such period (forbiddance at step S113). As described above, the example of FIG. 12 corresponds to the case where there are a lot of charge permitted accumulators and there is not leeway in the available power amount that can be provided by the power grid network 101. Therefore, in the determination of charge permission or forbiddance of FIG. 12, the charge forbiddance is determined when there is no time period for which the electrical power amount requested from the accumulator system 143-1 can be supplied during the requested time period. After that, it is determined as to whether the priority of the accumulator requesting charge in the priority determination (step S115) is higher than the priority of the accumulator with which charging has already been permitted charging or not is determined (S65). Adaptation is determined when conditions are satisfied (matching at step S115) and mismatching is determined when the conditions are not satisfied (mismatching at step S115), and FIG. 12 shows the example in the case where the priority determination of FIG. 12 determines matching. As a result, one or more accumulators are selected from among the lower priority accumulators with which charging has already been permitted, and a communication massage about charge forbiddance is generated and transmitted to the selected accumulators. When the controller 143-2b of the constant charge accumulator system 143-2 receives the communication massage about charge forbiddance, the controller 143-2b determines charge forbiddance with respect to the battery pack 143-2a (S73) and stop charging (S74 to S82). Furthermore, by recalculating the available power amount, it is possible to reduce the actual amount of electrical power to be consumed at the accumulator and the planed amount, and therefore, the EMS 10 performing as the charge determination device 106 executes the determination for charge permission or forbiddance again. In the example of FIG. 12, as a result of the redetermination, determination for permitting charge for the rapid charge accumulator system 143-1 is done based on the available power now having a leeway (S67), and a communication massage about charge permission is generated and transmitted (S68 to S53). In the example of FIG. 12, although the rapid charge accumulator system 143-1 is assumed as having a higher priority, as described above, it is also possible to be such method by which the priority can be determined based on charging information associated with usage of the accumulator. The accumulator system 143-1 receiving the charge permitting massage determines start of charging (S54), and starts charge control (S55 to S42).

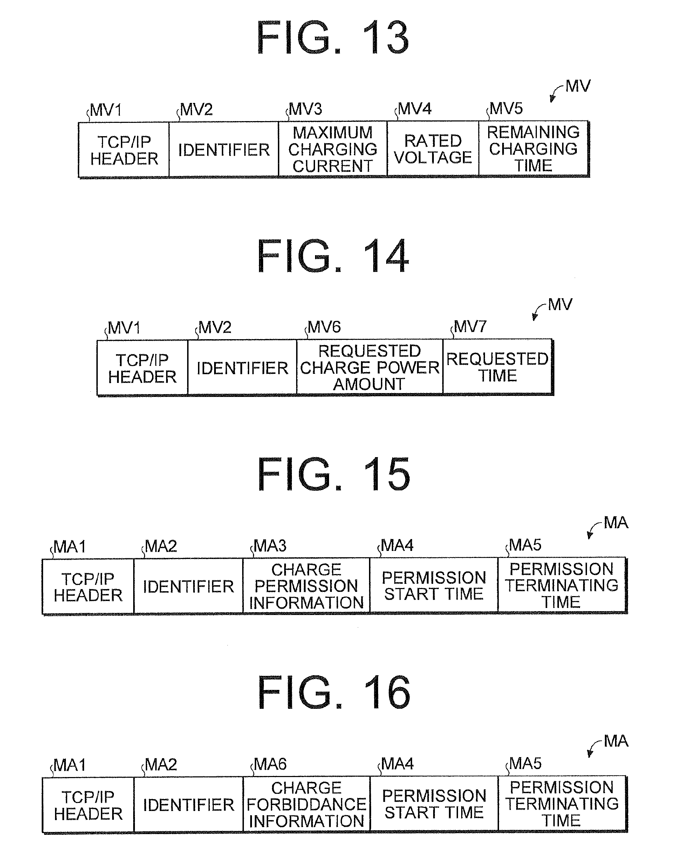

Examples of structures of the communication massages in the first embodiment are shown in FIGS. 13 to 16. FIGS. 13 and 14 are communication massages about the accumulator information generated by the charge control device, FIG. 15 is a communication massage about the charge permission information generated by the charge determination device, and FIG. 16 is a communication massage about the charge forbiddance generated by the charge determination device. These communication massages are treated by the accumulator information communicators 1463/1068 of the charge control device 146 and the charge determination device 106.

The communication massage MV about the accumulator information in FIG. 13 includes a TCP/IP (transmission control protocol/internet protocol) header MV1, an indicator MV2, a maximum charge current MV3, a rated voltage MV4 and a remaining charging time MV5. The TCP/IP header MV1 is communication control information of the TCP/IP protocol normally applied in internet and intranet. The indicator MV2 is information for uniquely specifying each individual accumulator, and corresponds to a serial number, or the like. As described above, by managing class information determinable from the identifier of the accumulator, the priority information associated with the class information, and so on, it is possible to execute the charge determination control with consideration of priority. As described above, in a charging method with constant current being an ordinary charging method, a current flowing into the battery cell inside the battery pack 143a remains at a constant state until the SOC expressed by percentage reaches a predetermined threshold. A maximum amount of this current amount is defined as the maximum charge current (unit: ampere (A)) MV3 of FIG. 13. The rated voltage (unit: voltage (V)) MV4 is voltage information used for expressing a battery voltage, and is expressed as normal voltage in JISD0114 (electric vehicle term (battery)). The remaining charging time (unit: hour (h)) MV5 is a chargeable time associated with the SOC. For instance, as shown in FIG. 5, when assuming that the SOC at a time when a constant current Ic terminates is 90 percent while the current SOC is 50 percent, the time necessary for charging the remaining 40 percent can be assumed as the remaining charging time MV5. However, a threshold of the SOC at the time when the constant current Ic terminates is different depending on a class of the accumulator, and it is not limited to a specific value. The electrical power amount (unit: watt-hour (Wh)) necessary for charging the accumulator can be calculated as a product of the maximum charge current MV3, the rated voltage MV4 and the remaining charging time MV5. FIG. 14 has the same structure as FIG. 13, although what is different from FIG. 13 is that the electrical power necessary for charging the accumulator is previously calculated as the requested charge power amount (unit: watt-hour (Wh)) MV6 and transmitted are different from the structure of FIG. 13. The requested time (unit: hour (h)) MV7 corresponds to the remaining charging time MV5.

The communication massage MA about charge permission of FIG. 15 includes a TCP/IP header MA1, an indicator MA2, charge permission information MA3, permission start time MA4, and permission terminating time MA5. The TCP/IP header MA1 and the identifier MA2 has the same definition as the information within the communication massages MV of FIGS. 13 and 14. The charge permission information MA3 indicates that the charge determination device 106 has permitted charging for the accumulator 143 having received the communication massage MA. The permission start time MA4 and the permission terminating time MA5 are voluntary information, and are used for assigning a certain time period in which charge control can be conducted. Specifically, in the determination process in the charge determination device 106, although a permitting determination is done if there is a period in which a required electrical power can be supplied during a required time, if the time for charge control is to be divided, it is preferable that the divided periods are assigned using the information on the permission start time MA4 and the permission terminating time MA5. In this case, it is possible to use a method of achieving the notification of charge permission or forbiddance by continuously assigning information about a current amount (or voltage amount) necessary for charging in association with the time axis, as well as a method of assigning charge control using a plurality of charge permission information MA3. FIG. 16 has the same structure as FIG. 15, although what is different from FIG. 15 is that charge forbiddance information MA6 for notifying forbiddance of charging is included.

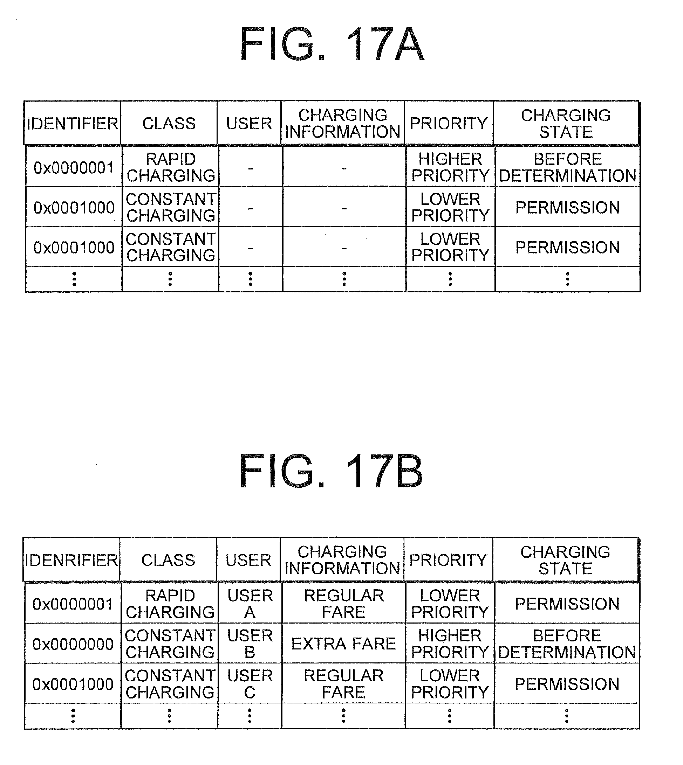

Structures of the priority manager 1064 of the charge determination device 106 in the first embodiment are shown in FIGS. 17A and 17B. FIG. 17A shows an example of a case where priority is determined by an identifier of the accumulator and class information determinable from this identifier. FIG. 17B shows an example of a case where priority is determined based on an identifier of the accumulator, user of the identifier and charging information associated with the user. The priority information of FIGS. 17A and 17B is used for executing a determination process in the charge determination device 106.

An identifier such as a serial number of the battery pack 143a (which has a plurality of battery cells and a monitor for monitoring these battery cells) in the accumulator system 143 can be used as the identifiers of the accumulator in FIGS. 17A and 17B. The class information is information for determining as to whether the accumulator system is a kind that executes rapid charging or constant charging based on the identifier of the accumulator. This information can be calculated by a method of acquiring based on the identifier on the charge determination device 106, a method of determining based on whether the maximum charge current flowing from the accumulator exceeds a predetermined threshold or not, as well as a method of making the accumulator separately transmit information about charging characteristic, or the like, but the first embodiment is not limited to these methods. In the example of FIG. 17A, the accumulator with an identifier of '0x00000' is determined as a rapid chargeable accumulator with higher priority. On the other hand, in a case where a soft space is associated with usage of an accumulator such as in a charging station in the EV system 144, it is possible to determine the priority based on charging information in such a way that an accumulator of a user with a high payment has a higher priority and an accumulator of a user with a lower payment has a lower priority. In this case, a configuration in which priority is determined by user information and charging information associated with the user can also be applied. Charging status of FIGS. 17A and 17B are used for distinguishing whether a determination result for the accumulator system 143 indicates charging permitted, charging forbidden, or before determination. Furthermore, although not shown, it is preferable that there are an IP address information, a TCP port number, a requested charging power amount, and requested time information. In a case of terminating the charge control of the accumulator 143 for which charging is already permitted, after the charging state is changed from permission to forbiddance, a communication massage about charge forbiddance is generated and transmitted.

As described above, according to the charge determination device, the charge determining method and the charge determination program according to the first embodiment, by having the determination unit configured to determine permission or forbiddance of charge control for the accumulator based on the power amount information necessary for the charge control of the accumulator and the power amount information about the power amount available by the power grid network, it is possible to prevent possible electrical power outage from occurring. Here, The functions of the charge determination device according to the first embodiment can be achieved on the EMS 100 installed at the power grid network as well as the HEMS installed in a premise of a household, the MEMS installed in a premise of a building, the FEMS installed in a premise of a factory, and the smart meter.

Furthermore, the charge control device 146 and the charge determination device 106 according to the first embodiment, for instance, can be achieved by using a general-purpose computer device as basic hardware. In such case, the charge control device 146 and the charge determination device 106 can be achieved by previously installing a determination program for actualizing each unit on a computer device, or by having the determination program distributed after storing it in a computer-readable medium such as CD-ROM or the like, or via a network, and then having the determination program installed on a computer device as appropriate. Furthermore, the devices can be achieved by appropriately using a computer-readable medium such as an embedded or external memory or a hard disk drive of the computer device, a CD-R, a CD-RW, a DVD-RAM, a DVD-ROM, or the like.

### Second embodiment

In the first embodiment, the example where the EMS 100 (or the EMMS in a premise of a household, the BEMS in a building, the FEMS in a factory) performs as the charge determination device 106 executing permitting or forbidding of charge was shown. On the other hand, in a second embodiment, an example where an accumulator (an accumulator system, an EV system) itself executes determination of permitting or forbidding of charge was shown. Specifically, the controller 143b in the accumulator system 143 of FIG. 2 and the battery charger 145 in the EV system 144 of FIG. 3 perform as a charge determination device having functions of the charge control device 146.

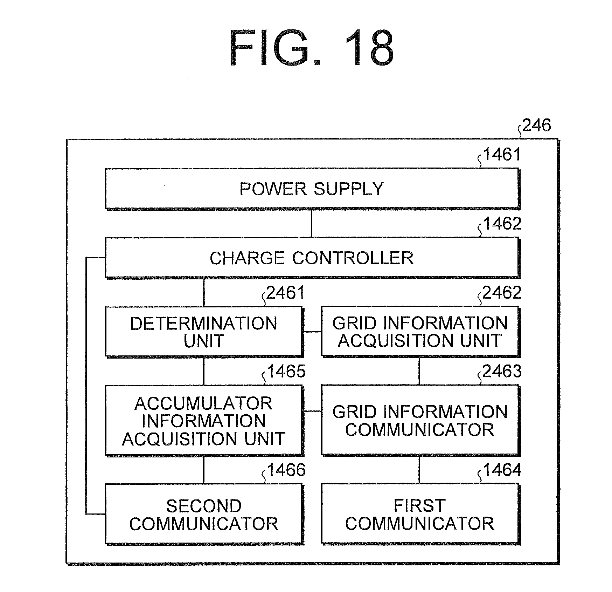

A structure of a charge determination device 246 according to the second embodiment is shown in FIG. 18. The charge determination device 246 is structured by the power supply 1461, the charge controller 1462, a gird information acquisition unit 2462, a grid information communicator 2463, the first communicator 1466, the accumulator information acquisition unit 1465, the second communicator 1466, and a determination unit 2461. In such structure, the power supply 1461, the charge controller 1462, the accumulator information acquisition unit 1465, the first communicator 1466, and the second communicator 1464 execute the same processes as the corresponding units on the charge control device 146 in the first embodiment. Specifically, the power supply 1461 executes converting direct current to alternate current, detecting frequency of electrical power, detecting and suppressing voltage variation, and so on, and executes supplying electrical power to the battery pack 143a according to an instruction from the charge controller 1462. The accumulator information acquisition unit 1465 acquires static information (rated voltage, rating capacity, beginning and terminating charge voltage, beginning and terminating discharge voltage, upper limit temperature, under limit temperature, maximum charge current, maximum discharge current, etc.) which is unique information specific to the battery pack 143a. Furthermore, the accumulator information acquisition unit 1465 periodically acquires state information (SOH, SOC, charge current, discharge current, charge voltage, discharge voltage) being dynamic information in battery pack operation. In a charging method with constant current being an ordinary charging method, a current flowing into the battery cell inside the battery pack 143a remains at a constant state until the SOC expressed by percentage reaches a predetermined threshold. Upon this, by acquiring a value of the SOC from the battery pack 143a, the charge control device 146 in the second embodiment can calculate the remaining charging time (the horizontal axis of the graph) corresponding to the SOC, a necessary maximum charge current (the vertical axis of the graph) for charging, and the electrical power amount (a product of the remaining charging time and a current value) necessary for charging. In charging at constant current, after the SOC exceeds the predetermined threshold, the current value necessary for charging becomes minimum. The second communicator 1466 is provided as the CAN 105 being a typical interface standard of the battery pack 143a or an electrical signal line uniquely standardized by a bender. The first communicator 1464 can be provided as a wire communication medium such as an optical fiber, a telephone line, an Ethernet, etc., or as a wireless communication medium such as ZigBee©, Bluetooth©, or the like©, but it does not depend on a specific communication medium.

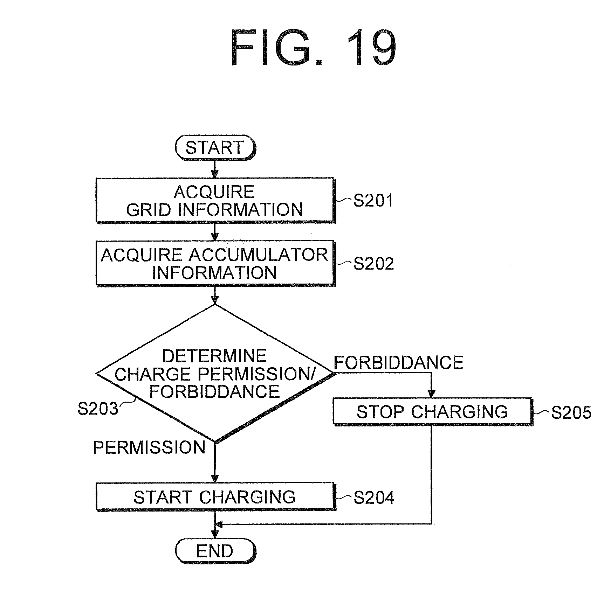

The grid information acquisition unit 2463 acquires an available power amount (unit: watt-hour (Wh)) that can be provided by the power grid network 101 via the grid information communicator 2463. In the second embodiment, an available power amount is calculated by having an EMS 200 on the power grid network 101, instead of the EMS 100 obtaining a difference between an actual amount (unit: watt-hour (Wh)) consumed at the side of the consumer 140, and a planed amount (unit: watt-hour (Wh)) based on a summation of electrical power productions (unit: watt-hour (Wh)) by the electrical power plant 110 and the natural energy system 120, and notified to the charge determination device 246. Here, when an accumulator having the role of the charge determination device 246 is installed at a section managed by the electrical power provider (for instance, it means that in FIG. 1 the accumulator system 130 is installed at the power grid network), although a configuration in that detailed information is communicated between the EMS 200 and the accumulator using a communication massage can be considered, if the accumulator is installed at the side of the consumer 140 such as a household or a building, depth of manageable information may become different. Therefore, a configuration in which a difference of a contracted power amount (unit: watt-hour (Wh)) and an actual power amount (unit: watt-hour (Wh)), which are managed at the smart meter 241 installed at the side of the consumer 140 is treated as an available power amount (unit: watt-hour (Wh)) can be applied. If a communication process by the first communicator 1464 is impossible, a configuration in that electrical power flowing on the power grid network 101 is treated as surplus when information about frequency or voltage on an electrical power line electrically monitored by the power supply 1461 exceeds a predetermined threshold, and electrical power flowing on the power grid network 101 is treated as shortage when the information exceeds a predetermined threshold can be considered. The determination unit 2461 executes a determination process for charge permission or forbiddance as shown in an operation flowchart of FIG. 19 based on such grid information and the above-described accumulator information. That is, the charge determination device 246 acquires information about a power amount (unit: watt-hour (Wh)) available by the power grid network 101 as grid information (step S201), and acquires a power amount information (unit: watt-hour (Wh)) necessary for the charge control of the accumulator as accumulator information (step S202). Next, in the determination unit 2461, the charge determination device 246 executes a permitting determination if there is a period in which a required electrical power can be supplied during a required time (step S205), and if there is no such period (forbiddance at step S203), executes a forbidding determination and stop charging (step S205). On the other hand, if there is such period (permission at step S203), the determination device 246 starts charging (step S204).

The grid information is calculated based on a difference of the contracted power amount and an actual power amount having transmitted from the smart meter 241, information about frequency or voltage of electrical power flowing on the power grid network 101, as well as an available power information having transmitted from the EMS 200. When the power amount information (unit: watt-hour (Wh)) is used, a determination based on the inclusive relation of time periods as shown in FIG. 8 may be executed. In the case where the information about frequency or voltage is used, it is possible to determine charge permission while determining the available power from the power grid network 101 is surplus in a case when the information exceeds a predetermined threshold, or charge forbiddance while determining the available power from the power grid network 101 is shortage in a case when the information does not exceed the predetermined threshold (the accumulator information is limited to information necessary for the charge control itself).

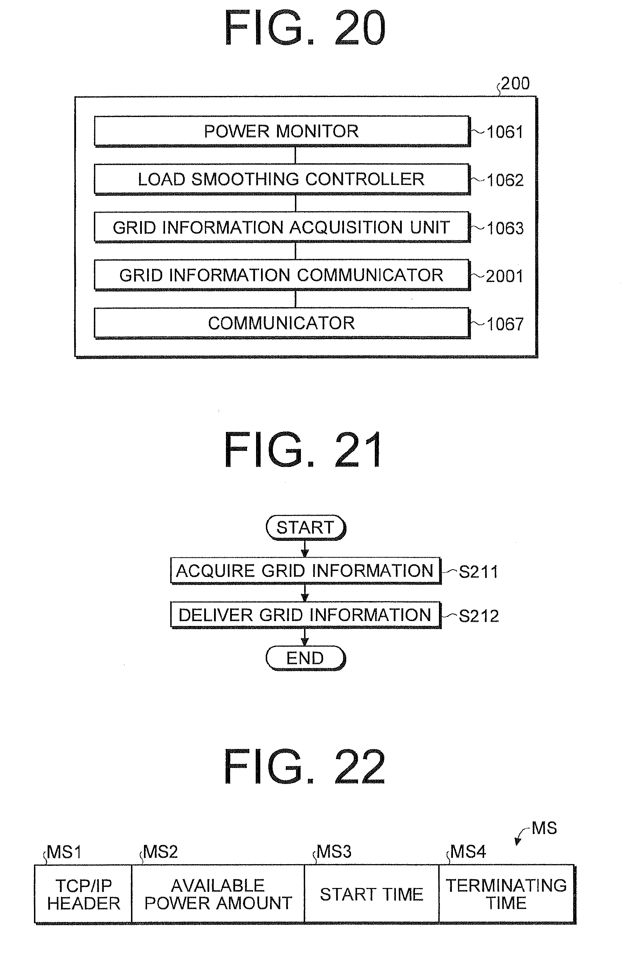

A schematic structure of the EMS in the second embodiment is shown in FIG. 20. The EMS 200 is structured with the power monitor 1061, the load smoothing controller 1062, the grid information acquisition unit 1063, a grid information communicator 2001, and the communicator 1067. In such structure, the power monitor 1061, the grid information acquisition unit 1063 and the communicator 1067 execute the same processes as the corresponding units on the charge determination device 106 in the first embodiment. The grid information communicator 2001 executes transmission/reception of a communication massage to/from the electrical power plant 110 and the MDMA, and executes transmission/reception of a communication massage about a power amount available by the power grid network to/from the charge determination device 246. An operation flowchart of the EMS 200 is shown in FIG. 21, and the communication massage about the grid information to be generated and transmitted by the EMS 200 is shown in FIG. 22. As shown in FIG. 21, the EMS 200, firstly, acquires an available power amount (unit: watt-hour (Wh)) that can be provided by the power grid network 101 as the grid information via the grid information acquisition unit 1063 (step S211), and then delivers the acquired grid information to a plurality of the accumulator systems 143 on the communication network 103 (step S212). Moreover, as shown in FIG. 22, the communication massage MS about the grid information includes a TCP/IP header MS1, an available power amount MS2 that the power grid network 101 can provide, a permission start time MS3, and a permission terminating time MS4.

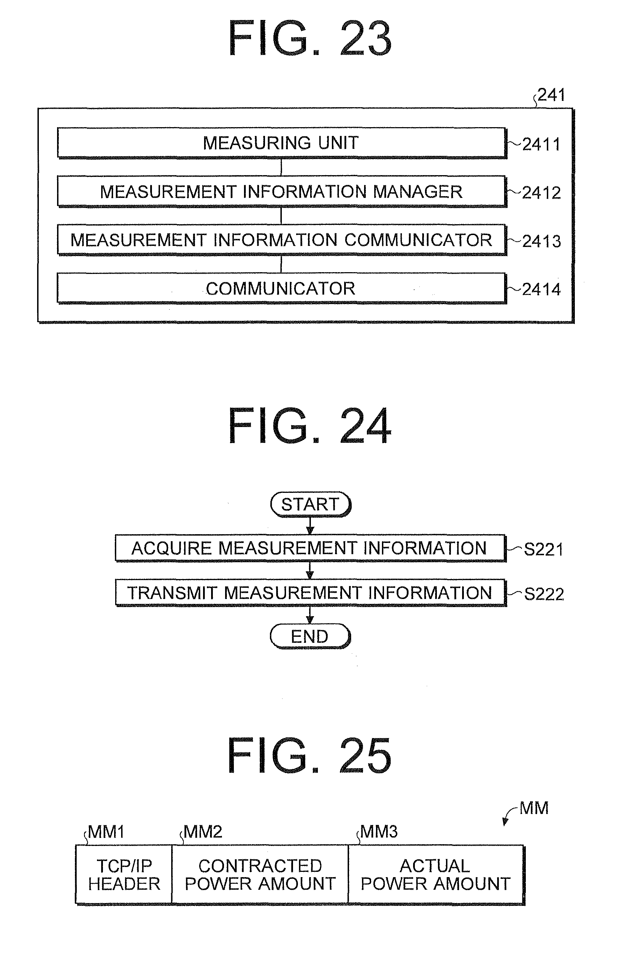

Next, a structure of the smart meter in the second embodiment is shown in FIG. 23. The smart meter 241 is structured with a measuring unit 2411, a measurement information manager 2413, a measurement information communicator 2413, and a communicator 2414. The measuring unit 2411 measures an actual amount of electrical power consumed at the premise of the consumer 140 such as household, building, etc. The measurement information manager 2412 acquires and manages the actual power amount from the measuring unit 2411, and manages a contracted power amount (usable power amount per time unit) between the consumer 140 and the electrical power provider. The measurement information communicator 2413 transmits/receives the information at the measurement information manager 2412 to/from the MDMA and premise devices on the power grid network 101 through communication massages. The communicator 2414 can be provided as a wire communication medium such as an optical fiber, a telephone line, an Ethernet, etc., or as a wireless communication medium such as zigBee©_{,} Bluetooth©, or the like©, but it does not depend on a specific communication medium. An operation of the smart meter 241 is shown in FIG. 24, and a communication massage about the measurement information generated and transmitted by the smart meter 241 is shown in FIG. 25. As shown in FIG. 24, the smart meter 241, firstly, measures an actual amount of electrical power consumed at the premise of the consumer 140 such as household, building, etc. in the measuring unit 2411 (step S221), and then delivers the acquired measurement information to a plurality of accumulator systems 143 on the communication network 103 (step S222). Moreover, as shown in FIG. 25, the communication massage MM about the measurement information includes a TCP/IP header MM1, a contracted power amount MM2 between the consumer 140 and the electrical power provider, an actual power amount MM3 being an actual amount of electrical power consumed at the premise of the consumer 140 such as household, building, etc.

In addition, due to the power grid network 101 being generally higher independent independence, as described in the second embodiment, use of the configuration in which permission or forbiddance of charge is determined at each individual accumulator installed at each area can be various. Here, for instance, there is a case where frequency or voltage suddenly drops due to electrical power becoming short in response to charging of a plurality of accumulators, for which charge permissions have been determined for it has been recognized that there is surplus in the available power by the power grid network 101 while the frequency or voltage of electrical power at some point of time has exceeded the predetermined threshold, starting at the some time. In this case, it is possible to continue the charge control if the frequency or voltage is within a range of the regulation (as an example in Japan, frequency is set to 50Hz/60Hz, and voltage to 100V) ordered by the electrical power provider, although if the frequency or voltage widely exceeds the regulation range, there is a of stopping the operation on an individual accumulator basis by changing the determination result from permission to forbiddance. Or, there is a necessity of executing variation control by changing the operation the operation from chargin to discharging.

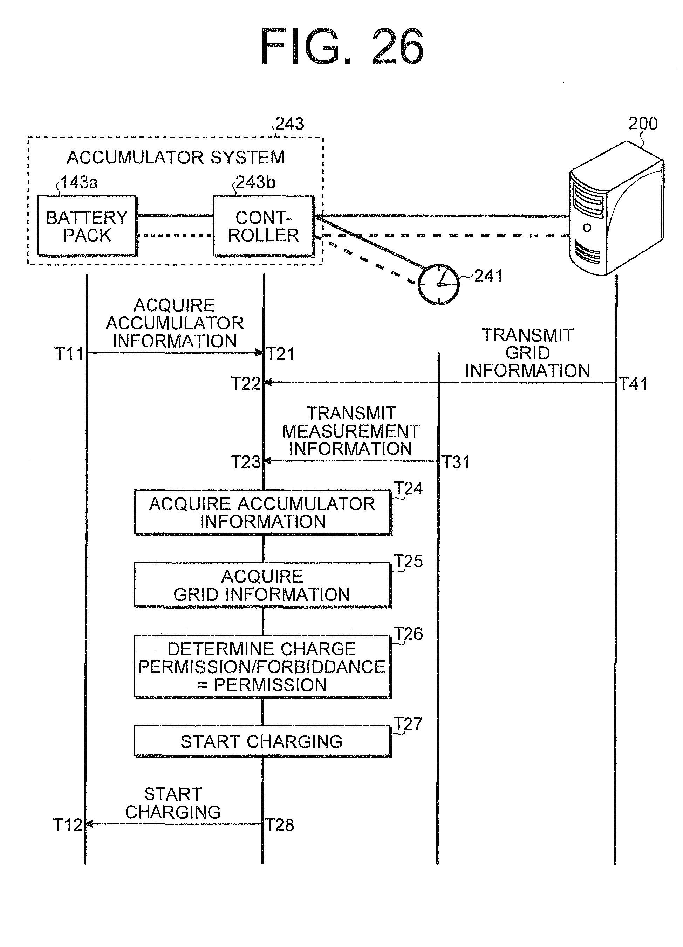

Here, mutual sequences of the charge control device 246 and the charge determination device 106 in the second embodiment are shown in FIG. 26. FIG. 26 shows an operation in the case where charge is permitted in the determination of permission or forbiddance for charging (permission at step S203). As shown in FIG. 26, the controller 243b of the accumulator 243 corresponds to the charge determination device 246 having functions of the charge control device. In order to start charging, the controller 243b acquires accumulator information from the battery pack 143a (T11 to T21). As described above, the accumulator information is constructed from a rated voltage, a maximum charge current, and a remaining charging time associated with the SOC. A product of these information items is to be a requested charging power amount necessary for charging the accumulator. Moreover, to the controller 243b, the communication massage MS including the grid information is transmitted from the EMS 200 (T41 to T22), and furthermore, the communication massage including the measurement information is transmitted from the smart meter 241 (T31 to T23). The controller 243b acquires the accumulator information transmitted from the battery pack 143a (T32) and acquires the available power amount associated with time as grid information (T33). The available power amount is calculated by obtaining a difference between an actual amount (unit: watt-hour (Wh)) consumed at the side of the consumer 140 and a planed amount (unit: watt-hour (Wh)) from the electrical power productions by the electrical power plant 110 and the natural energy system 120. After that, the controller 243b performing as the charge determination device 246 determines permission or forbiddance of charge control based on the requested charging power amount of the accumulator and the available power amount at the side of the grid (T26). In the determination method, as in step S203 of FIG. 19, permission is determined if there is a period in which a required electrical power can be supplied during a required time (permission at step S203), and forbiddance is determined if there is no such period (forbiddance at step S203). In FIG. 26, the example of the case where the permission is determined is shown, and the controller 243b starts charging (T28 to T12) when charge is permitted (T27).

According to the charge determination device 246 according to the second embodiment, by having the determination unit 2461 configured to determine permission or forbiddance of charge control for the accumulator based on the power amount information necessary for the charge control of the accumulator and the power amount information about the power amount available by the power grid network 101, it is possible to prevent possible electrical power outage from occurring.

The charge determination device 246, for instance, can be achieved by using a general-purpose computer device as basic hardware. That is, the accumulator information acquisition unit 1465 which acquires the power amount information necessary for the charge control of the accumulator, the grid information acquisition unit 2462 which acquires the power amount information about the power amount available by the power grid network 101, and the determination unit 2461 which determines permission or forbiddance of charge control for the accumulator based on the power amount information necessary for the charge control of the accumulator and the power amount information about the powr amount available by the power grid network 101 can be achieved by letting a processor mounted on the above-mentioned computer execute the determination program. In such case, the charge control device 246 can be achieved by previously installing the above-described determination program on a computer device, or by having the determination program distributed after storing it in a computer-readable medium such as CD-ROM or the like, or via a network, and then having the determination program installed on a computer device as appropriate. Furthermore, the devices can be achieved by appropriately using a computer-readable medium such as an embedded or external memory or a hard disk drive of the computer device, a CD-R, a CD-RW, a DVD-RAM, a DVD-ROM, or the like.

According to the above-described embodiments, by having the determination unit configured to determine permission or forbiddance of charge control for the accumulator based on the power amount information necessary for the charge control of the accumulator and the power amount information about the power amount available by the power grid network, it is possible to prevent possible electrical power outage from occurring.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Although the first and second embodiments have been explained mainly with a focus on the descriptions about charge control of the accumulator, discharge control of the accumulator can also be achieved by the same framework. For example, because the remaining charging time and the remaining discharging time as associated with the SOC, it is possible to calculate a requested discharge power amount (unit: watt-hour (Wh)) by obtaining a product of a remaining discharging time (unit: hour (h)), a maximum discharge current (unit: ampere (A)) and a rated voltage (unit: voltage (V)). Moreover, when a permissible value for discharge electrical power from the natural energy system 120 and the accumulator toward the power grid network 101 is defined as a dischargeable electrical power, the same process of comparing the available electrical power and the requested charge power can be applied to a comparison of the dischargeable electrical power and the requested discharge power.

### Reference Signs List

- 100, 200: EMS
- 101: POWER GRID NETWORK
- 103: COMMUNICATION NETWORK
- 105: CAN
- 106, 246: CHARGE DETERMINATION DEVICE
- 1061: POWER MONITOR
- 1062: LOAD SMOOTHING CONTROLLER
- 1063, 2462: GRID INFORMATION ACQUISITION UNIT
- 1064: PRIORITY MANAGER
- 1065, 1465: ACCUMULATOR INFORMATION ACQUISITION UNIT
- 1066, 2461: DETERMINATION UNIT
- 1067, 2463, 2001: GRID INFORMATION COMMUNICATOR
- 1068, 1463: ACCUMULATOR INFORMATION COMMUNICATOR
- 1069: COMMUNICATOR
- 110: ELECTRICAL POWER PLANT
- 120: NATURAL ENERGY SYSTEM
- 130, 143, 143-1, 143-2, 243: ACCUMULATOR SYSTEM
- 140: CONSUMER
- 141: SMART METER
- 142: HEMS
- 143a, 143a-1, 143-2a, 144a: BATTERY PACK
- 143b, 143-1b, 143-2b, 144b, 243b: CONTROLLER
- 144: EV SYSTEM
- 145: BATTERY CHARGER
- 146: CHARGE CONTROL DEVICE
- 1461: POWER SUPPLY
- 1462: CHARGE CONTROLLER
- 1464: FIRST COMMUNICATOR
- 1466: SECOND COMMUNICATOR
- MA, MM, MV: COMMUNICATION MASSAGE
- MA1, MM1, MV1: TCP/IP HEADER
- MA2, MV2: INDICATOR
- MA3: CHARGE PERMISSION INFORMATION
- MA4: PERMISSION START TIME
- MA5: PERMISSION TERMINATING TIME
- MA6: CHARGE FORBIDDANCE INFORMATION
- MM2: CONTRACTED POWER AMOUNT
- MM3: ACTUAL POWER AMOUNT
- MV3: MAXIMUM CHARGE CURRENT
- MV4: RATED VOLTAGE
- MV5: REMAINING CHARGING TIME
- MV6: REQUESTED CHARGE POWER AMOUNT
- MV7: REQUESTED TIME
- PS: AVAILABLE POWER AMOUNT
- PR: REQUESTED ELECTRICAL POWER AMOUNT
- RC, RF, RCD1 TO RCD3: REQUEST

## Claims

1. A determination device of determining permission/forbiddance to charge an accumulator that obtains electrical power from a power grid network comprising:
an accumulator information acquisition unit configured to acquire information about a requested power amount requested to charge the accumulator;
a grid information acquisition unit configured to acquire information about an available power amount that can be provided from the power grid network; and
a determination unit configured to determine permission or forbiddance with respect to the accumulator based on the information about the requested power amount and the information about the available power amount.

2. The device according to Claim 1, wherein the accumulator information acquisition unit obtains the information about the requested power amount by multiplying a maximum charging current amount flowable into the accumulator, a rated voltage amount of the accumulator and a remaining charging time that is defined by a remaining battery level of the accumulator.

3. The device according to Claim 1, wherein the grid information acquisition unit obtains the information about the available power amount by subtracting a summation of an actual amount of a power consumption consumed at a premise of a consumer at which the accumulator is installed and a planed amount of a possible power consumption estimated as consumed at the consumer, from the electrical power amount from the power grid network.

4. The device according to Claim 1, wherein the grid information acquisition unit obtains the information about the available power amount by subtracting an actual amount of a power consumption consumed at a premise of a consumer at which the accumulator is installed and a planed amount of a possible power consumption estimated at the consumer, from a contracted power amount from the power grid network.

5. The device according to Claim 2, wherein the determination unit manages the information of the requested power amount and the available power amount while associating with time, respectively, and when there exists a time period of which time length is equal to or longer than the remaining charging time and in which the requested power amount requested for charging the accumulator becomes equal to or less than the available power amount, permits charging the accumulator.

6. The device according to Claim 2, wherein the determination unit manages the information of the requested power amount and the available power amount while associating with time, respectively, and when there exists no time period of which time length is equal to or longer than the remaining charging time or in which the requested power amount requested for charging the accumulator becomes equal to or less than the available power amount, forbids charging the accumulator.

7. The device according to Claim 2, wherein the determination unit permits charging the accumulator when a value of frequency or voltage of electrical power provided by the power grid network exceeds a predetermined threshold.

8. The device according to Claim 2, wherein the determination unit forbids charging the accumulator when a value of frequency or voltage of electrical power provided by the power grid network does not exceed a predetermined threshold.

9. The device according to Claim 5, wherein the determination unit forbids charging the accumulator when the value of frequency or voltage of the electrical power provided by the power grid network becomes under the predetermined threshold after permitting charging the accumulator.

10. The device according to Claim 1, further comprising a manager configured to decide a priority of each accumulator based on an inflowable current amount per unit time, wherein
when the priority decided by the manager to a first accumulator for which charging is forbidden is higher than a priority decided by the manager to a second accumulator for which charging is permitted, the determination unit forbids charging the second accumulator and permits charging the first accumulator.

11. A determining method of determining permission/forbiddance to charge an accumulator that obtains electrical power from a power grid network including:
acquiring information about a requested power amount requested to charge the accumulator;
acquiring information about an available power amount that can be provided from the power grid network; and
determining permission or forbiddance with respect to the accumulator based on the information about the requested power amount and the information about the available power amount.

12. A determination program for operating a computer to determine permission/forbiddance to charge an accumulator that obtains electrical power from a power grid network including the instructions which:
acquiring information about a requested power amount requested to charge the accumulator;
acquiring information about an available power amount that can be provided from the power grid network; and
determining permission or forbiddance with respect to the accumulator based on the information about the requested power amount and the information about the available power amount.
